# EUROPÄISCHE PATENTANMELDUNG

(11) **EP 2 330 031 A2**
(43) Veröffentlichungstag der Anmeldung: **08.06.2011**
(21) Anmeldenummer: 10173960.5
(22) Anmeldetag: 25.08.2010
(51) Int. Cl.: B63H 23/24, B60L 1/00, B60L 11/12, B60W 10/06

(54) **Vorrichtung zum Antrieb eines Fahrzeugs, insbesondere eines Wasserfahrzeugs**

(30) Priorität: 04.11.2009 DE 202009015026 U
(71) Anmelder: Fischer Panda GmbH, 33104 Paderborn (DE)
(72) Erfinder: Krause, Christian, 33332 Gütersloh (DE); Herbermann, Hans-Joachim, 33102 Paderborn (DE)
(74) Vertreter: Ostermann, Thomas

(57) **Zusammenfassung**

Die Erfindung betrifft eine Vorrichtung zum Antrieb eines Fahrzeugs, insbesondere eines Wasserfahrzeugs, enthaltend einen zur Erzeugung elektrischer Energie mit einem Generator zusammenwirkenden Verbrennungsmotor, enthaltend eine über einen Gleichrichter mit dem Generator zusammenwirkende Energiespeichereinrichtung zur Bevorratung von seitens des Generators bereitgestellter elektrischer Energie sowie zur bedarfsgerechten Abgabe derselben und enthaltend eine mittels einer Motorsteuereinrichtung ansteuerbare Antriebseinrichtung mit wenigstens einem Elektromotor, wobei die Energie zum Betrieb des Elektromotors von dem Generator und/oder von der Energiespeichereinrichtung bereitstellbar ist, wobei die Motorsteuereinrichtung wenigstens zwei voneinander funktional unabhängige Motorsteuermodule aufweist zur Ansteuerung des Elektromotors.

## Beschreibung

Die Erfindung betrifft eine Vorrichtung zum Antrieb eines Fahrzeugs, insbesondere eines Wasserfahrzeugs, enthaltend einen zur Erzeugung elektrischer Energie mit einem Generator zusammenwirkenden Verbrennungsmotor, enthaltend eine über einen Gleichrichter mit dem Generator zusammenwirkende Energiespeichereinrichtung zur Bevorratung von seitens des Generators bereitgestellter elektrischer Energie sowie zur bedarfsgerechten Abgabe derselben und enthaltend eine mittels einer Motorsteuereinrichtung ansteuerbare Antriebseinrichtung mit wenigstens einem Elektromotor, wobei die Energie zum Betrieb des Elektromotors von dem Generator und/oder von der Energiespeichereinrichtung bereitstellbar ist.

Allgemein bekannt ist, Schiffe und andere maritime Objekte mittels eines dieselelektrischen Antriebs anzutreiben. Hierbei wird mittels eines Verbrennungsmotors und eines mit dem Verbrennungsmotor gekoppelten Generators elektrische Energie zum Betrieb eines Elektromotors für einen Propeller erzeugt. Der Elektromotor ist beispielsweise ortsfern von dem Generator in räumlicher Nähe zu dem Propeller angeordnet. Der Elektromotor kann die elektrische Energie direkt von dem Generator beziehen, wobei der Elektromotor bei laufendem Generator betrieben wird. Ebenso sind so genannte Hybridantriebssysteme für Schiffe und andere maritime Objekte bekannt, bei denen von dem Generator bereitgestellte elektrische Energie in einer Energiespeichereinrichtung, beispielsweise einer Batterie, zwischengespeichert wird. Der Elektromotor kann mit der in der Energiespeichereinrichtung bevorrateten Energie betrieben werden. Hierbei erfolgt der Antrieb des Propellers mittels des Elektromotors unabhängig, beispielsweise zeitversetzt zum Betrieb des Generators. Das Schiff kann bei abgeschaltetem Generator besonders leise angetrieben werden, was beispielsweise bei der Einfahrt in einen Hafen vorteilhaft ist.

Lange Zeit wurden das dieselelektrische bzw. das hybride Antriebssystem als Zusatzantrieb für Segelschiffe oder primär dieselmechanisch angetriebene Schiffe verwendet, bei denen ein Verbrennungsmotor über eine Welle mit dem Propeller verbunden ist. In zunehmender Weise werden diese Antriebssysteme jedoch als Hauptfahrantrieb verwendet, wobei auf das Vorsehen alternativer Antriebe, beispielsweise dieselmechanischer Antriebe, verzichtet wird. Mehr als zuvor ist hierbei eine hohe Betriebssicherheit des Antriebssystems gefordert, da ein antriebs- und/oder navigationsunfähiges Schiff ein hohes Sicherheitsrisiko für die Schiffsbesatzung ebenso wie für andere Schiffe darstellt.

Aufgabe der vorliegenden Erfindung ist es daher, ein dieselelektrisches bzw. hybrides Antriebssystem für Fahrzeuge, insbesondere Wasserfahrzeuge, derart weiterzubilden, dass die Zuverlässigkeit und Wirtschaftlichkeit des Systems erhöht werden.

Zur Lösung dieser Aufgabe ist die Erfindung in Verbindung mit dem Oberbegriff des Patentanspruchs 1 dadurch gekennzeichnet, dass die Motorsteuereinrichtung wenigstens zwei voneinander funktional unabhängige Motorsteuermodule aufweist zur Ansteuerung des Elektromotors.

Der besondere Vorteil der Erfindung besteht darin, dass die Betriebssicherheit und Zuverlässigkeit des Antriebssystems durch die Redundanz im Bereich der Motorsteuerung erhöht werden. Da die Motorsteuereinrichtung zwei vollkommen unabhängige, eigenständige Motorsteuermodule aufweist, kann der wenigstens eine Elektromotor beim Ausfall eines der beiden Motorsteuermodule mittels des zweiten der beiden Motorsteuermodule weiter betrieben werden. Die Fahrtüchtigkeit und Navigationsfähigkeit des Fahrzeugs wird hierdurch auch bei einem Ausfall eines beliebigen der zwei Motorsteuermodule gewahrt, so dass die Sicherheit und Zuverlässigkeit erhöht wird.

Als Oberbegriff wird im Rahmen dieser Anmeldung unter dem Begriff "Steuern" auch das Regeln umfasst. Insbesondere kann eine Regelung bzw. ein Regelalgorithmus mittels der Motorsteuereinrichtung bzw. eines Steuermoduls implementiert werden.

Nach einer bevorzugten Ausführungsform der Erfindung weist der Elektromotor wenigstens zwei Wicklungsstränge auf, wobei ein erster Wicklungsstrang von dem ersten Motorsteuermodul und ein zweiter Wicklungsstrang von dem zweiten Motorsteuermodul ansteuerbar ist. Vorteilhaft kann der Elektromotor hierdurch beim Ausfall eines der beiden Motorsteuermodule fortbetrieben werden, ohne dass etwa ein Umschalten von dem defekten Motorsteuermoduls auf ein Reservemotorsteuermodul erforderlich ist. Indem dauerhaft beide Motorsteuermodule verwendet werden, kann darüber hinaus einem unentdeckten Defekt des als Reservemotorsteuermodul bereitgehaltenen, nicht aktiven Motorsteuermoduls vorgebeugt werden. Darüber hinaus ist das Antriebssystem nunmehr auch im Bereich der Antriebseinrichtung redundant ausgebildet. Bei einem Ausfall einer Wicklung kann der Motor mittels der zweiten, von dem Ausfall nicht betroffenen Wicklung weiter betrieben werden. Die Betriebssicherheit und Zuverlässigkeit des Antriebssystems werden hierdurch weiter erhöht.

Nach einer Weiterbildung der Erfindung umfasst die Antriebseinrichtung zwei Elektromotoren, wobei ein erster Elektromotor mit dem ersten Motorsteuermodul und ein zweiter Elektromotor mit dem zweiten Motorsteuermodul angesteuert werden. Vorteilhaft ist auch hier eine Redundanz im Bereich der Antriebseinrichtung gegeben. Beim Ausfall von einem der beiden Elektromotoren oder beim Ausfall der beiden Steuergeräte fällt lediglich einer von zwei Antriebssträngen aus. Ein zweiter Antriebsstrang ist von dem Ausfall nicht betroffen und steht für den Antrieb und die Navigation des Schiffes zur Verfügung.

Nach einer Weiterbildung der Erfindung ist wenigstens ein Motorsteuermodul als ein Frequenzumrichter zur drehzahlvariablen Ansteuerung des mit diesem Motorsteuermodul verbundenen Elektromotors ausgebildet. Vorteilhaft kann das Fahrzeug hierdurch sehr feinfühlig und variabel angetrieben werden, so dass über das von dem Elektromotor bereitgestellte Drehmoment beispielsweise die Geschwindigkeit in einem sehr weiten Einstellbereich variiert werden kann.

Nach einer Weiterbildung der Erfindung sind das erste Steuermodul und das zweite Steuermodul baugleich ausgebildet. Vorteilhaft erhöht sich hierdurch die Wirtschaftlichkeit der Lösung, da auf baugleiche Komponenten zurückgegriffen werden kann. Ferner ist die Wartung des Systems durch einen Servicetechniker vereinfacht und die Bereitstellung von Ersatzteilen bzw. Austausch-Motorsteuermodulen mit einem geringen logistischen Aufwand möglich.

Nach einer Weiterbildung der Erfindung ist wenigstens ein Steuermodul als ein im 4-Quadranten-Betrieb betreibbarer Umrichter ausgebildet. Vorteilhaft kann der Elektromotor hierdurch als Generator betrieben werden und die in dem als Generator betriebenen Elektromotor gewonnene elektrische Energie über den Umrichter in die Energiespeichereinrichtung eingespeist werden. Der Betrieb des Schiffs wird somit besonders wirtschaftlich, da sich der Gesamtwirkungsgrad des Antriebssystems aufgrund der Energierückgewinnung verbessert. Darüber hinaus bietet sich insbesondere für Segelschiffe die Möglichkeit, bei einem Ausfall des Generators bzw. des Verbrennungsmotors die Batterien zum Antrieb des Elektromotors bzw. zur Bordstromversorgung aufzuladen. Das Antriebssystem verfügt hierdurch über eine weitere Redundanz im Bereich der Energiegewinnung, so dass die Betriebssicherheit und Zuverlässigkeit weiter erhöht werden.

Nach einer Weiterbildung der Erfindung ist die Motorsteuereinrichtung datentechnisch derart mit einer übergeordneten Zentralsteuerung gekoppelt, dass von der Zentralsteuerung ausgehende Steuersignale von der Motorsteuereinrichtung erfasst und zur Erzeugung lokaler Steuergrößen verarbeitet werden. Vorteilhaft kann die Motorsteuereinrichtung hierdurch mit anderen, ebenfalls mit der Zentralsteuerung zusammenwirkenden Steuereinheiten, beispielsweise einem Steuergerät für das Batteriemanagement bzw. einem Steuergerät des Generators zusammenwirken. Beispielsweise kann der Betriebspunkt der Elektromotoren so gewählt werden, dass sich ein Wirkungsgrad des gesamten Antriebssystems optimal einstellt.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Prinzipdarstellung einer ersten Ausfüh- rungsform der Erfindung und
- Figur 2: eine Prinzipdarstellung einer zweiten Ausfüh- rungsform der Erfindung.

Eine Vorrichtung zum Antrieb eines Fahrzeugs, insbesondere eines Wasserfahrzeugs, beispielsweise eines Schiffs oder eines anderen maritimen Objekts, besteht im Wesentlichen aus einem Generator 1, der von einem Verbrennungsmotor 2 angetrieben wird, einer mit dem Generator 1 gekoppelten Energiespeichervorrichtung 3, die beispielsweise als ein Akkumulator ausgebildet ist, sowie einer Motorsteuereinrichtung 4 und einer Antriebseinrichtung 5. Der Generator 1 und der Verbrennungsmotor 2 bilden typischerweise gemeinsam mit einem Gleichrichter 6, der zur Gleichrichtung der von dem Generator 1 zur Verfügung gestellten elektrische Energie dient, eine gemeinsame Baueinheit 7. Die Antriebseinrichtung 5 wird aus einem Elektromotor 8, der insbesondere als ein Drehstrommotor ausgebildet ist, und aus einem Propeller 9 zum Antrieb des Fahrzeugs gebildet.

Derlei Antriebssysteme werden als hybride Antriebssysteme bezeichnet und beispielsweise als Hilfsantriebe für Segelschiffe bzw. für primär über einen dieselmechanischen Antrieb angetriebenen großen Handels- und Passagierschiffen eingesetzt. Darüber hinaus werden diese Antriebssysteme in zunehmendem Maße als alleiniger Fahrantrieb für Motorboote eingesetzt. Vorteilhaft kann durch das Vorsehen derartiger Antriebssysteme eine besonders feine und variable Steuerung des Fahrzeugs realisiert werden. Darüber hinaus ergeben sich große Vorteile hinsichtlich der Anordnung der Antriebskomponenten an Bord, da durch den Verzicht auf den bei dieselmechanischen Antriebssystemen zwingend vorgesehenen Antriebsschaft eine besonders große Gestaltungsfreiheit geschaffen ist. Zusätzlich kann die Baueinheit 7 mit Generator 1 und Verbrennungsmotor 2 sehr kompakt ausgeführt und geräuschgedämmt werden, so dass ein besonders leiser Antrieb realisiert werden kann. Zudem ist bekannt, auf die Energiespeichervorrichtung 3 zu verzichten und dem Generator 1 direkt mit dem Elektromotor 8 zu verbinden.

Der Elektromotor 8 verfügt über zwei nicht dargestellte Wicklungen, die beispielsweise hintereinander angeordnet sind. Jede der Wicklung ist separat mit der Motorsteuereinrichtung 4 verbunden, wobei eine erste Wicklung mit einem ersten Motorsteuermodul 10 und eine zweite Wicklung mit einem zweiten Motorsteuermodul 11 der Motorsteuereinrichtung 4 verbunden ist. Bei Ansteuerung des Elektromotors 8 über beide Motorsteuermodule 10, 11 kann der Elektromotor 8 mit voller Leistung angesteuert werden. Sofern ein Motorsteuermodul 10, 11 oder eine Wicklung des Elektromotors 8 ausfällt, kann der Elektromotor 8 über den verbleibenden Antriebsstrang aus einem Motorsteuergerät 10, 11 und einer Wicklung mit reduzierter Leistung fortbetrieben werden. Damit ist bei einem Ausfall einer Wicklung bzw. eines Motorsteuermoduls 10, 11 der Antrieb und die Navigationsfähigkeit des Fahrzeugs gewährleistet.

Das Antriebssystem ist auch im Bereich der Energiebereitstellung redundant ausgebildet. Energie zum Betrieb der Antriebseinrichtung 5 kann wahlweise direkt von dem Generator 1, von der Energiespeichereinrichtung 3 oder gemeinsam vom Generator 1 und der Energiespeichereinrichtung 3 bereitgestellt werden. Beim Ausfall des Generators 1 besteht unverändert die Energiespeichereinrichtung 3 zur Speisung der Antriebseinrichtung 5 zur Verfügung. Ein Defekt kann hierbei entweder direkt an dem Generator 1, dem Verbrennungsmotor 2 oder dem Gleichrichter 6 auftreten. Bei einem Defekt der Energiespeichereinrichtung 3 kann die Antriebseinrichtung 5 direkt vom Generator 1 gespeist werden.

Das Antriebssystem ist demzufolge in allen Komponenten redundant ausgeführt. Im Bereich der Energiebereitstellung sind der Generator 1 und die Energiespeichereinrichtung 3 funktional parallel geschaltet. Im Bereich der Motorsteuerung sind das erste Motorsteuermodul 10 und das zweite Motorsteuermodul 11 redundant vorgehalten. Im Bereich der Antriebseinrichtung 5 ist ein Elektromotor 8 mit zwei Wicklungen vorgesehen, wobei je eine Wicklung mit dem ersten Motorsteuermodul 10 und dem zweiten Motorsteuermodul 11 verbunden sind. Hierdurch erhöhen sich die Betriebssicherheit und Zuverlässigkeit.

Der Elektromotor 8 kann zeitgleich von dem Generator 1 und der Energiespeichereinrichtung 3 mit Energie versorgt werden. Beispielsweise kann vorgesehen sein, dass der Elektromotor 8 von dem Generator 1 allein nicht mit voller Leistung betrieben werden kann. Der Generator 1 kann hierdurch besonders klein, kompakt und kostengünstig ausgeführt sein. Die maximale Leistung stellt die Antriebseinrichtung 5 nur dann zur Verfügung, wenn der Generator 1 und die Energiespeichereinrichtung 3 den Elektromotor 8 gemeinsam speisen.

Das erste Motorsteuermodul 10 und das zweite Motorsteuermodul 11 der Motorsteuereinrichtung 4 sind trotz ihrer funktionalen Eigenständigkeit in einem gemeinsamen Gehäuse in unmittelbarer räumlicher Nähe zueinander angeordnet. Beispielsweise kann die Motorsteuereinrichtung 4 benachbart zu dem Generator 1 oder zu dem Elektromotor 8 angeordnet sein. Die Motorsteuermodule 10, 11 können mittels einer gemeinsamen Kühleinheit gekühlt werden, wobei die Kühleinheit beispielsweise über einen gemeinsamen Kühlkörper, über gemeinsame Kühlkanäle oder über eine gemeinsame Kühlflüssigkeitspumpe verfügt. Ebenso ist es möglich, dass das erste Motorsteuermodul 10 und das zweite Motorsteuermodul 11 einen gemeinsamen Schaltungsträger, beispielsweise eine Platine, aufweisen.

Die beiden Motorsteuermodule 10, 11 sind als Umrichter ausgebildet, die in der Lage sind, Energie vom Generator 1 bzw. der Energiespeichereinrichtung 3 zum Elektromotor 8 und vom Elektromotor 8 zur Batterie 3 zu übertragen. Bei dem sogenannten 4-Quadranten-Betrieb der Umrichter 10, 11 wird etwa beim Segeln oder beim Bremsen Energie zurückgewonnen und in die Energiespeichereinrichtung 3 geladen. Energie kann in diesem Fall auch ohne laufenden Generator 1 gewonnen werden. Dies ist beispielsweise relevant, wenn der Generator 1, der Verbrennungsmotor 2 oder der Gleichrichter 6 ausfallen. Hierzu ist das Motorsteuermodul 10, 11 beispielsweise als ein netzgeführter Wechselrichter ausgebildet, der bei einer steigenden Kondensatorspannung aus den Kondensatoren gespeist wird und Energie aus dem Zwischenkreis des Wechselrichters 10, 11 in die Energiespeichereinrichtung 3 zurückspeist.

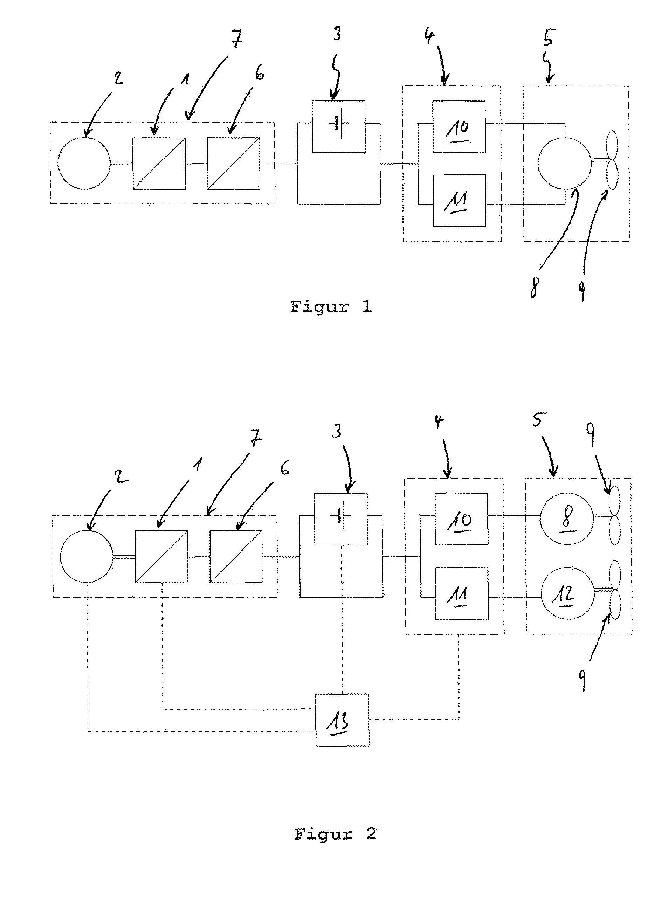

Eine alternative Ausführungsform der Erfindung gemäß Figur 2 weist eine aus Generator 1, Verbrennungsmotor 2 und Gleichrichter 6 gebildete Baueinheit 7 auf, die in bekannter Weise mit der Energiespeichereinrichtung 3 und der Motorsteuereinrichtung 4 zusammenwirkt. Die Antriebseinrichtung 5 ist jedoch durch einen ersten Elektromotor 8 und einen zweiten Elektromotor 12 gebildet, wobei jeder Elektromotor 8, 12 einen eigenen Propeller 9 antreibt. Die Elektromotoren 8, 12 weisen beispielsweise eine Wicklung auf, wobei der erste Elektromotor 8 von dem ersten Motorsteuermodul 10 und der zweite Elektromotor 12 von dem zweiten Motorsteuermodul 11 angesteuert wird.

Gleiche Bauteile und Bauteilfunktionen sind durch gleiche Bezugsziffern gekennzeichnet.

Beim Ausfall eines der beiden Elektromotoren 8, 12 bzw. eines Motorsteuermoduls 10, 11 sind der Antrieb und die Navigationsfähigkeit des Fahrzeugs über den intakten Elektromotor 8, 12 und das zugehörige Motorsteuermodul 10, 11 gewährleistet.

Ferner weist das Antriebssystem eine Zentralsteuerung 13 auf, die mit der Motorsteuereinrichtung 4, der Energiespeichereinrichtung 3, dem Generator 1 und dem Verbrennungsmotor 2 zusammenwirkt. Die Zentralsteuerung 13 kann hierbei entweder die Steuerung des Generators 1, des Verbrennungsmotors 2 bzw. der Energiespeichereinrichtung 3 direkt übernehmen oder mit einem diesen zugeordneten, nicht dargestellten untergeordneten Steuergerät zusammenwirken. Vorteilhaft kann durch das Vorsehen einer zentralen Steuerkomponente 13, die über die dargestellten Kommunikationskanäle hinaus mit weiteren Funktionseinheiten des Fahrzeugs verbunden sein kann, eine Optimierung des Energiemanagements an Bord des Fahrzeugs bewirkt werden. Beispielsweise kann die Energiespeichereinrichtung 3 andere elektrische Verbraucher an Bord des Fahrzeugs mit Energie versorgen und die Zentralsteuerung 13 zur Steuerung dieser Verbraucher dienen.

Die datentechnische Kopplung der Zentralsteuerung 13 mit den untergeordneten Steuergeräten, insbesondere mit der Motorsteuereinrichtung 4, kann kabelgebunden bzw. drahtlos erfolgen. Hierbei ist eine Punkt-zu-Punkt-Verbindung ebenso darstellbar wie eine BUS-gestützte Kommunikation.

## Patentansprüche

1. Vorrichtung zum Antrieb eines Fahrzeugs, insbesondere eines Wasserfahrzeugs, enthaltend einen zur Erzeugung elektrischer Energie mit einem Generator zusammenwirkenden Verbrennungsmotor, enthaltend eine über einen Gleichrichter mit dem Generator zusammenwirkende Energiespeichereinrichtung zur Bevorratung von seitens des Generators bereitgestellter elektrischer Energie sowie zur bedarfsgerechten Abgabe derselben und enthaltend eine mittels einer Motorsteuereinrichtung ansteuerbare Antriebseinrichtung mit wenigstens einem Elektromotor, wobei die Energie zum Betrieb des Elektromotors von dem Generator und/oder von der Energiespeichereinrichtung bereitstellbar ist, **dadurch gekennzeichnet, dass** die Motorsteuereinrichtung (4) wenigstens zwei voneinander funktional unabhängige Motorsteuermodule (10, 11) aufweist zur Ansteuerung des Elektromotors (8, 12).

2. Vorrichtung nach Anspruch 1, **dadurch gekennzeichnet, dass** der Elektromotor (8, 12) wenigstens zwei Wicklungen aufweist, wobei eine erste Wicklung von einem ersten Motorsteuermodul (10) und eine zweite Wicklung von einem zweiten Motorsteuermodul (11) ansteuerbar ist.

3. Vorrichtung nach Anspruch 1 oder 2, **dadurch gekennzeichnet, dass** die Antriebseinrichtung (5) wenigstens zwei Elektromotoren (8, 12) aufweist, wobei ein erster Elektromotor (8) von dem ersten Motorsteuermodul (10) und ein zweiter Elektromotor (12) von dem zweiten Motorsteuermodul (11) ansteuerbar ist.

4. Vorrichtung nach einem der Ansprüche 1 bis 3, **dadurch gekennzeichnet, dass** wenigstens ein Motorsteuermodul (10, 11) als ein Frequenzumrichter zur drehzahlvariablen Ansteuerung des Elektromotors (8, 12) ausgebildet ist.

5. Vorrichtung nach einem der Ansprüche 1 bis 4, **dadurch gekennzeichnet, dass** das erste Motorsteuermodul (10) baugleich zu dem zweiten Motorsteuermodul (11) ausgebildet ist.

6. Vorrichtung nach einem der Ansprüche 1 bis 5, **dadurch gekennzeichnet, dass** das erste Motorsteuermodul (10) und das zweite Motorsteuermodul (11) in einem gemeinsamen Gehäuse angeordnet sind.

7. Vorrichtung nach einem der Ansprüche 1 bis 6, **dadurch gekennzeichnet, dass** für das erste Motorsteuermodul (10) und das zweite Motorsteuermodul (11) eine gemeinsame Kühleinheit vorgesehen ist zur Kühlung wenigstens einzelner Komponenten der Motorsteuermodule (10, 11).

8. Vorrichtung nach einem der Ansprüche 1 bis 7, **dadurch gekennzeichnet, dass** eine gemeinsame Platine als ein Schaltungsträger sowohl für das erste Motorsteuermodul (10) als auch für das zweite Motorsteuermodul (11) angeordnet ist.

9. Vorrichtung nach einem der Ansprüche 1 bis 8, **dadurch gekennzeichnet, dass** wenigstens ein Motorsteuermodul (10, 11) als ein im 4-Quadranten-Betrieb betreibbarer Umrichter ausgebildet ist, wobei der Elektromotor (8, 12) als Generator (1) betrieben ist und die in dem als Generator (1) betriebenen Elektromotor (8, 12) gewonnene elektrische Energie über den Umrichter (10, 11) in der Energiespeichereinrichtung (3) bevorratet ist.

10. Vorrichtung nach einem der Ansprüche 1 bis 9, **dadurch gekennzeichnet, dass** die Motorsteuereinrichtung (4) datentechnisch derart mit einer übergeordneten Zentralsteuerung (13) gekoppelt ist, dass von der Zentralsteuerung (13) ausgehende Steuersignale von der Motorsteuereinrichtung (4) erfasst und zur Erzeugung lokaler Steuergrößen verarbeitet werden.
